## Europäisches Patentamt

## European Patent Office

## Office européen des brevets

(11) Veröffentlichungsnummer: **0 271 605**
**B1**

(12) **EUROPÄISCHE PATENTSCHRIFT**

(45) Veröffentlichungstag der Patentschrift:
27.12.90

(51) Int. Cl.⁵: **G01F 1/84**

(21) Anmeldenummer: **86201695.3**

(22) Anmeldetag: **02.10.86**

(54) **Massendurchflussmessgerät mit Einrichtung zur Ermittlung der Corioliskraft.**

(43) Veröffentlichungstag der Anmeldung:
**22.06.88 Patentblatt 88/25**

(45) Bekanntmachung des Hinweises auf die Patenterteilung:
**27.12.90 Patentblatt 90/52**

(84) Benannte Vertragsstaaten:
**DE FR GB IT**

(56) Entgegenhaltungen:
**US-A- 4 311 054**
**US-A- 4 559 833**

(73) Patentinhaber: **Krohne AG, Schützenmattstrasse 43,
CH-4003 Basel(CH)**

(72) Erfinder: **Hohloch, Manfred, Trailhöferstrasse 86,
D-7159 Auenwald 1(DE)**
Erfinder: **Steffen, Walter, Dr.-Ing., Wiesenstrasse 10,
D-7401 Pliezhausen(DE)**
Erfinder: **Stumm, Wolfgang, Dr.rer.nat., Gumpperweg 14,
D-7410 Reutlingen(DE)**
Erfinder: **Owen, Stephen, MA, 8 Hillside, Royston
Hertfordshire(GB)**

(74) Vertreter: **Gesthuysen, Hans Dieter, Dipl.-Ing. et al,
Patentanwälte Gesthuysen + von Rohr
Huyssenallee 15 Postfach 10 13 33, D-4300 Essen 1(DE)**

## Beschreibung

Die Erfindung betrifft ein Massendurchflußmeßgerät für strömende Medien mit Einrichtungen zur Ermittlung der Corioliskraft, welches aus einem mit zwei Rohrschleifen versehenen, schraubenartig gebogenen durchgehenden Meßrohr besteht, dessen Zu- und Abflußenden an einem massiven Gußblock befestigt sind und zwischen dessen gegeneinander schwingbaren Rohrschleifen ein Schwingungserzeuger und zwei die Torsionsschwingungen messende Sensoren angeordnet sind.

Bei einem gattungsgemäß ausgebildeten Massendurchflußmeßgerät (WO 85/05677) besteht das Meßrohr aus einem einheitlichen Rohrstück, das schraubenartig gebogen ist, so daß die beiden Rohrschleifen auf einer wendelförmigen Linie verlaufen. Die Zu- und Abflußenden sind von den Außenwindungen tangential in entgegengesetzte Richtungen geführt und außerhalb der Rohrschleifen in eine gemeinsame Mittelachse eingebogen, wo auch die Befestigung bzw. Einspannung in Gußblöcken erfolgt. Diese Befestigung führt zwar zu einer relativ günstigen, fast ausschließlichen Torsionsbelastung an den beiden Einspannstellen. Der große Abstand zwischen den Einspannstellen verursacht jedoch einen erheblichen mechanischen Aufwand und führt durch mechanische Versteifungseinrichtungen zu einem großen Platzbedarf, wenn man eine äußere Schwingungseinflüsse möglichst ausschließende Versteifung realisieren will.

Weiter bekannt ist ein Massendurchflußmeßgerät (US-A 4 311 054), bei dem das Meßrohr aus mehreren Teilen besteht. Das Meßrohr weist nämlich eine obere, in einer Ebene U-förmig gebogene Rohrschleife, eine untere, in einer parallelen Ebene angeordnete, ebenfalls U-förmig gebogene Rohrschleife, jeweils ein gerades Zufluß- und Abflußende und einen ebenfalls U-förmig ausgebildeten Rohrverbindungsabschnitt auf. Alle diese Teile des Meßrohrs sind an einer massiven Tragplatte befestigt bzw. eingespannt und innerhalb der Tragplatte strömungstechnisch miteinander verbunden. Hierbei ist nachteilig, daß alle Einzelteile des Meßrohrs an der als Gußblock ausgeführten Tragplatte gesondert befestigt, insbesondere also angeschweißt werden müssen. Die Schweißanschlüsse der beiden Rohrschleifen müssen die beim Schwingen auftretenden Verformungskräfte aufnehmen, so daß hier leicht Schäden auftreten können.

Als Stand der Technik gilt gemäß Art. 54 (3) EPÜ auch ein Massendurchflußmeßgerät (EP-A 0 239 679), bei dein das Meßrohr in vier Teile unterteilt ist, nämlich zwei oval gebogene, etwa parallel zueinander angeordnete Rohrschleifen sowie ein Zuflußende und ein Abflußende aufweist, die allesamt mit ihren inneren Enden an einen gemeinsamen, massiven Gußblock mit innenliegenden Verbindungskanälen angeschweißt sind. Hier gilt in gleicher Weise wie beim zuvor erläuterten Stand der Technik, daß das Anschweißen der, einzelnen Teile am Gußblock aufwendig ist und daß die Schweißanschlüsse durch die darin beim Schwingen auftretenden Verformungskräfte störanfällig sind.

Der Erfindung liegt die Aufgabe zugrunde, ein Massendurchflußmeßgerät der gattungsgemäßen Art, also ein Massendurchflußmeßgerät mit durchgehendem Meßrohr, auf besonders zweckmäßige Art und Weise zu versteifen und das Meßrohr an für Schwingungsbelastungen günstigen Stellen einzuspannen.

Die zuvor aufgezeigte Aufgabe ist erfindungsgemäß dadurch gelöst, daß die beiden Rohrschleifen jeweils in einer Ebene oval gebogen sind, etwa parallel zueinander verlaufen und an einer Längsseite des Ovals jeweils mit zwei entlang einer gemeinsamen, in der jeweiligen Ebene liegenden Längsachse hinter, einander liegenden Rohrabschnitten versehen sind, daß zwei in unterschiedlichen Ebenen, aber in Richtung der Längsachsen hintereinander liegende Rohrabschnitte durch einen in einem Winkel zu den Längsachsen verlaufenden mittleren Rohrverbindungsabschnitt über Kreuz verbunden sind, daß die beiden anderen Rohrabschnitte in entgegengesetzten Richtungen bogenförmig zwischen die beiden Rohrschleifen und von dort entlang einer gemeinsamen, parallel zu den Längsachsen verlaufenden Achse an jeweils einer Stirnseite des Ovals nach außen geführt sind und dort in das Zuflußende bzw. das Abflußende auslaufen und daß die Rohrschleifen im Bereich der vier Rohrabschnitte im Gußblock eingelegt, eingespannt und befestigt, vorzugsweise angelötet, sind.

Die neue Ausbildung des ohne Unterbrechung durchlaufenden Meßrohres hat zunächst den Vorteil, daß das Gerät besonders kompakt ist. Die beiden Rohrschleifen haben eine besonders günstige Form zur mechanischen Schwingungserzeugung und Messung der durch die Corioliskräfte verursachten Verdrehungen. Da die Rohrschleifen an durchlaufenden Abschnitten des Meßrohres eingespannt und befestigt, insbesondere angelötet sind, werden die sonst hier an Schweißnähten auftretenden Zerstörungen vermieden.Das Meßrohr ist dabei günstig gebogen, daß der die beiden Rohrschleifen verbindende mittlere Rohrverbindungsabschnitt und die Ausbiegungen für die Zu- und Abflußenden innerhalb des von den beiden Rohrschleifen umspannten Raumes liegen.

Besonders zweckmäßig läßt sich das erfindungsgemäße Massendurchflußmeßgerät dadurch konstruieren, daß das Meßrohr aus zwei gleich geformten, etwa hakenförmig gebogenen Rohrbögen und einem den Rohrverbindungsabschnitt umfassenden mittleren Rohrbogen besteht, wobei, vorzugsweise, jeder hakenförmige Rohrbogen sich von dem Zu- bzw. Abflußende bis zur Mitte der schwingbaren Längsseite der betreffenden Rohrschleife erstreckt und der mittlere Rohrbogen die restlichen Teile der Rohrschleifen umfaßt und, vorzugsweise, die Rohrbögen an den Stoßstellen miteinander verschweißt sind. Dieser Aufbau gestattet zunächst eine einfache Fertigung und Montage des in seinem Aufbau kompakten, jedoch komplizierten Meßrohres. Zur Herstellung werden drei Rohrteile benötigt, von denen zwei Rohrteile identisch sind, und diese drei Rohrteile werden zu dem durchlaufenden einheitlichen Meßrohr durch Orbitalschweißung verbunden, mit der eine spaltfreie Verschweißung zu erzielen ist, Die beiden orbitalen Schweißnähte liegen in vorteilhafter Weise an Stellen des Meßrohres, an denen die geringste mechanische Belastung auftritt, außerdem aber auch symmetrisch zu den Einspannstellen. Zum Schutz können die beiden orbitalen Schweißnähte jeweils durch einen am Meßrohr angelöteten Ring abgedeckt rein, an denen der Schwingungserzeuger befestigt sein kann.

Der der Versteifung und Verspannung dienende Gußblock besteht vorzugsweise aus einer innerhalb der ovalen Rohrschleifen liegenden und deren Ebenen schneidenden Grundplatte und einer Abdeckplatte, welche das Meßrohr an den vier Rohrabschnitten einfassende Halbschalen aufweisen und mit den Rohrabschnitten sowie miteinander verlötet sind. Diese Ausbildung erlaubt eine einfache Montage. Das Meßrohr wird in den Gußblock eingelegt und in die Position gebracht, in der die Rohrabschnitte in den Halbschalen liegen. Anschließend wird die Deckplatte aufgelegt und verlötet. Zur Abstützung der Zu- und Ablaufenden ist die Grundplatte mit entsprechend angeordneten Stützstegen und Halbschalen versehen und über diese mit den Zu- und Ablaufenden verlötet. Nach dem Zusammenbau ist das Massendurchflußmeßgerät mit seinen Zu- und Ablaufenden, die beispielsweise mit Anschlußflanschen versehen sein können, in eine von dem zu messenden Medium durchströmte Rohrleitung einbaubar.

Der Gegenstand der Erfindung ist in der Zeichnung in einem Ausführungsbeispiel dargestellt; es zeigt

Fig. 1 das Meßrohr eines Massendurchflußmeßgerätes in einer perspek- tivischen Darstellung und schematisiert,

Fig. 2 ein Massendurchflußmeßgerät in einer seitlichen Ansicht,

Fig. 3 den Gegenstand der Fig. 2 in einem mittleren Längsschnitt und ohne Gehäuse,

Fig. 4 den Gegenstand der Fig. 2 in einer Ansicht von der Stirnseite,

Fig. 5 den Gegenstand der Fig. 2 in einer Draufsicht auf das Meßrohr und auf den Gußblock, ohne Abdeckplatte,

Fig. 6 die Unterseite einer Abdeckplatte für den Gußblock und

Fig. 7 einen Abschnitt des Gegenstandes der Fig. 2 in einer Ansicht von unten mit dem Schwingungserzeuger und den Sensoren.

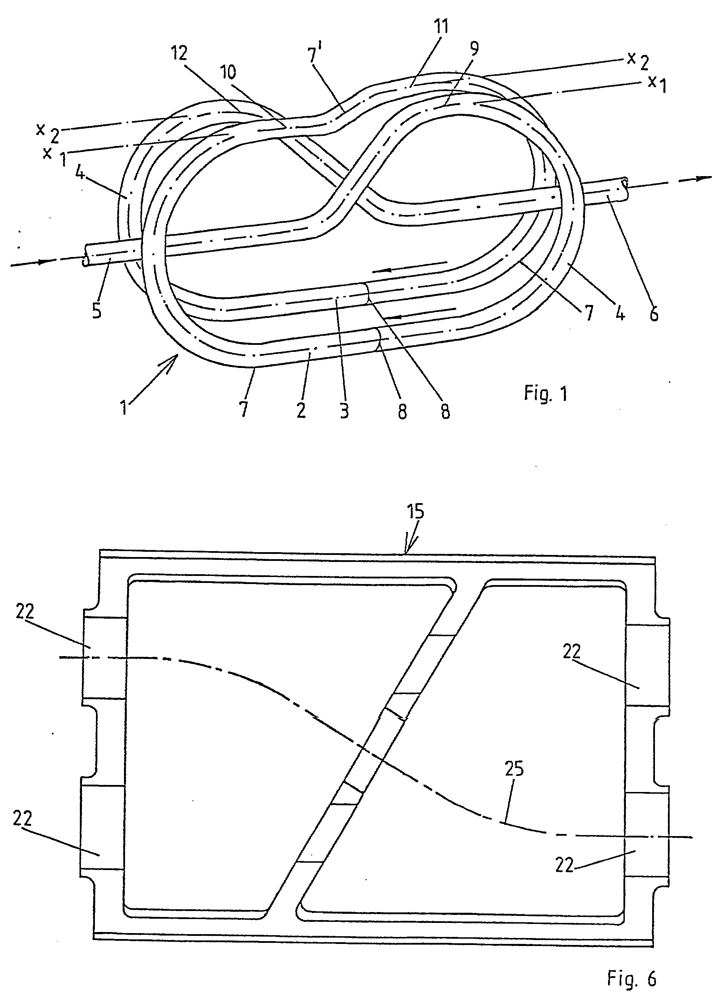

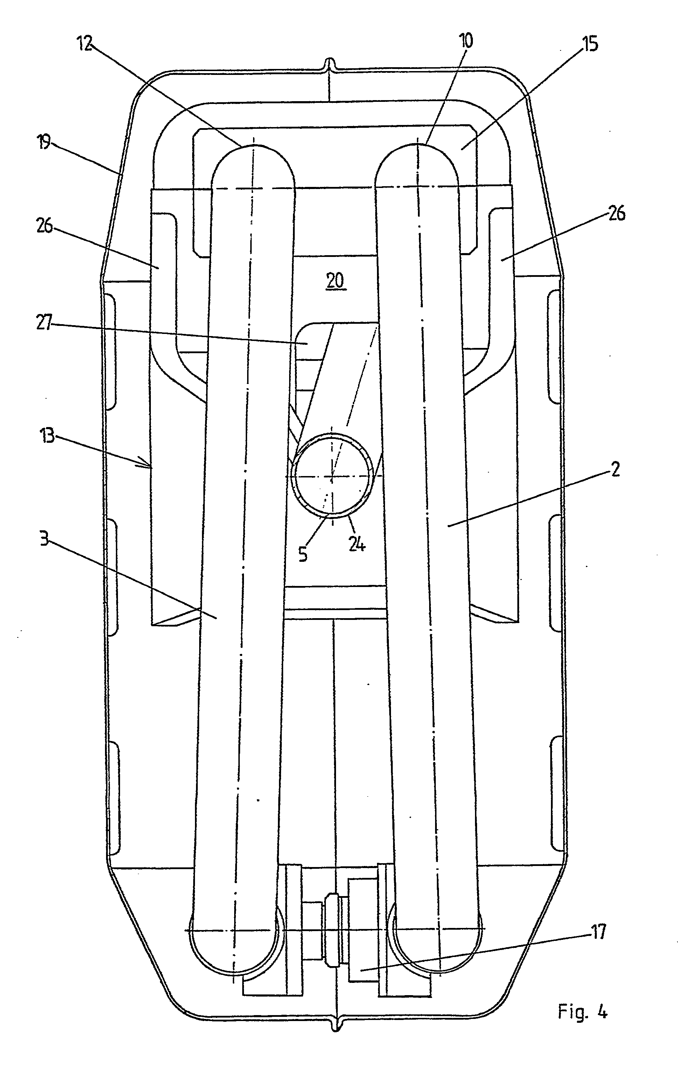

Das in Fig. 1 vereinfacht dargestellte Meßrohr 1 besteht aus einem durchgehenden einheitlichen Rohr, daß von dem zu messenden Medium durchflossen wird. Es ist schraubenartig gebogen, so daß zwei Rohrschleifen 2, 3 gebildet werden, die jeweils in einer Ebene oval gebogen sind und mit Abstand etwa parallel zueinander liegen (vgl. auch Fig. 4). Da das Meßrohr 1 gewissermaßen einen Knoten darstellt, ist es aus drei Rohrteilen zusammengebaut, die an ihren Stoßstellen nach dem sogenannten Stumpfschweiß-Orbitalverfahren spaltfrei verschweißt werden und dann das durchgehende einheitliche Meßrohr 1 bilden. Zu den drei Rohrteilen gehören zwei identische, hakenförmig gebogene Rohrbögen 4. Der in Fig. 1 gezeigte vordere hakenförmige Rohrbogen 4 umfaßt ein Zuflußende 5 und erstreckt sich über die rechte Ausbiegung um 180° bis zur Mitte der unteren Längsseite der vorderen Rohrschleife 2; entsprechend umfaßt der hintere hakenförmige Rohrbogen 4 ein Abflußende 6 und erstreckt sich über die linke Ausbiegung um 180° bis zur Mitte der unteren Längsseite der hinteren Rohrschleife 3. Das dritte Rohrteil ist ein einen mittleren, in einem Winkel zu den Ebenen verlaufenden Rohrverbindungsabschnitt 7, umfassender, beide Rohrschleifen 2, 3 über Kreuz verbindender Rohrbogen 7, der außerdem die jeweils andere Hälfte der betreffenden Rohrschleifen 2 bzw. 3 umfaßt. Die Verschweißung der drei Rohrteile geschieht an den unteren Stoßstellen, wo in Fig. 1 orbitale Schweißnähte 8 angedeutet sind. Aus Fig. 1 ist erkennbar, daß der mittlere Rohrverbindungsabschnitt 7, in der gleichen Höhe liegt wie an der oberen Längsseite der Rohrschleifen 2, 3 entlang von Längsachsen $x_1 - x_1$ bzw. $x_2 - x_2$ verlaufende Rohrabschnitte 9, 10, 11, 12. Der mittlere Rohrverbindungsabschnitt 7, verläuft in einem Winkel zu den Längsachsen $x_1 - x_1$, $x_2 - x_2$ und verbindet über Kreuz zwei in unterschiedlichen Ebenen, aber in Richtung der Längsachsen $x_1 - x_1$, $x_2 - x_2$ hintereinander liegende Rohrabschnitte 10, 11. Die beiden anderen Rohrabschnitte 9, 12 sind in entgegengesetzter Richtung bogenförmig zwischen die beiden Rohrschleifen 2, 3 und von dort entlang einer gemeinsamen, parallel zu den Längsachsen $x_1 - x_1$, $x_2 - x_2$ verlaufenden Achse an jeweils einer Stirnseite des Meßrohres 1 insgesamt nach außen geführt. Sie laufen dort in das Zuflußende 5 bzw. in das Abflußende 6 aus. Die Rohrabschnitte 9, 10, 11, 12 bilden Einspannstellen, an denen das Meßrohr 1 insgesamt in einem Gußblock 13 eingespannt und befestigt, vorzugsweise angelötet, ist.

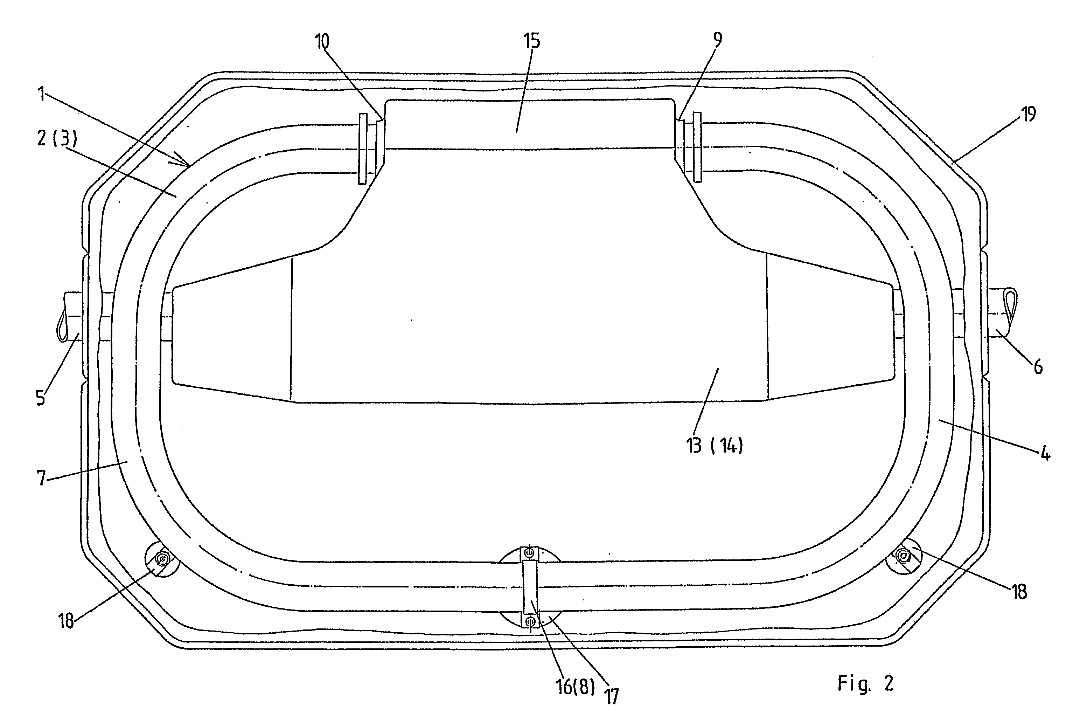

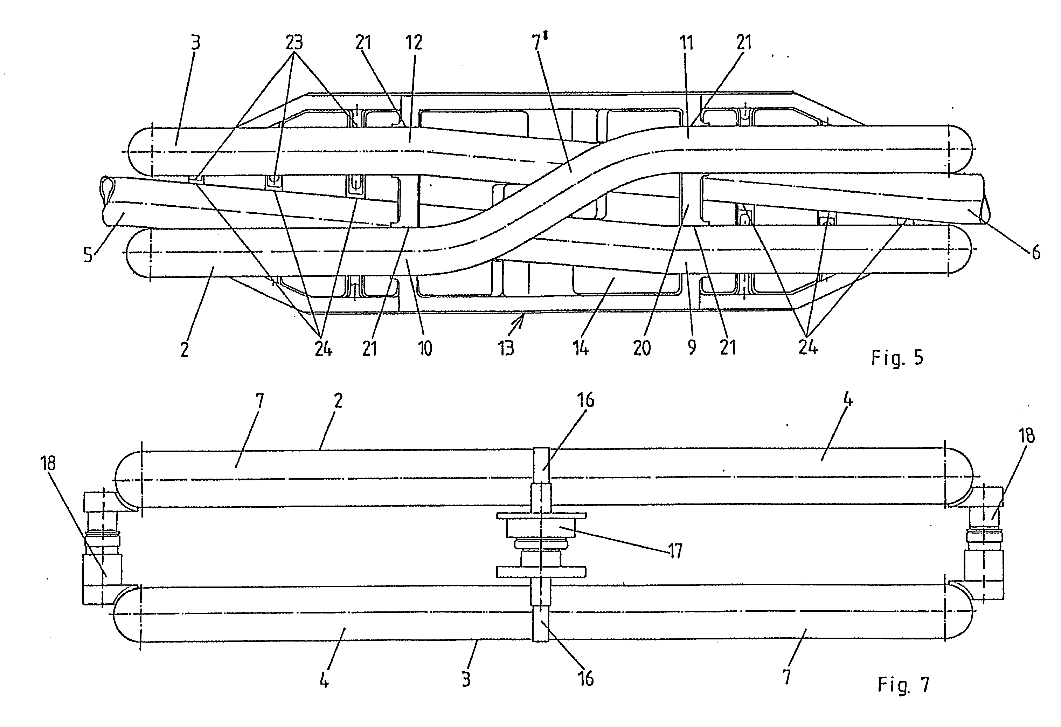

Fig. 2 zeigt, daß die ovale Rohrschleife 2 mit den Rohrabschnitten 9, 10 am Kopf des Gußblocks 13 heraus- und nach unten um den Gußblock 13 herumführt und dabei eine schwingbare Rohrschleife bildet. Parallel hierzu liegt die andere identisch ausgebildete Rohrschleife 3 (vgl. Fig. 4 und 5). Der Gußblock 13 besteht u.a. aus einer Grundplatte 14 und einer Abdeckplatte 15; beide Teile sind massive Gußstücke. Fig. 2 zeigt weiterhin, daß die beiden orbitalen Schweißnähte 8 von je einem angelöteten Ring 16 abgedeckt sind, der als Befestigungsorgan für einen magnetischen Schwingungserzeuger 17 dient, welcher zwischen den beiden Rohrschleifen 2, 3 angeordnet ist und diese in entgegengesetzte Schwingungen versetzt (vgl. Fig. 4 und 7). Auch zeigt Fig. 2 in Verbindung mit Fig. 7 zwei Sensoren 18, die an den Seiten zwischen den Rohrschleifen 2, 3 angeordnet sind und die durch die Corioliskräfte verursachten Verdrehungen der Rohrschleifen 2, 3 erfassen. Schließlich ist in den Fig. 2 und 4 angedeutet, daß das im wesentlichen aus dem Meßrohr 1 und dem Gußblock 13 bestehende Massendurchflußmeßgerät mit einem aus zwei Halbschalen bestehenden Gehäuse 19 ausgestattet sind.

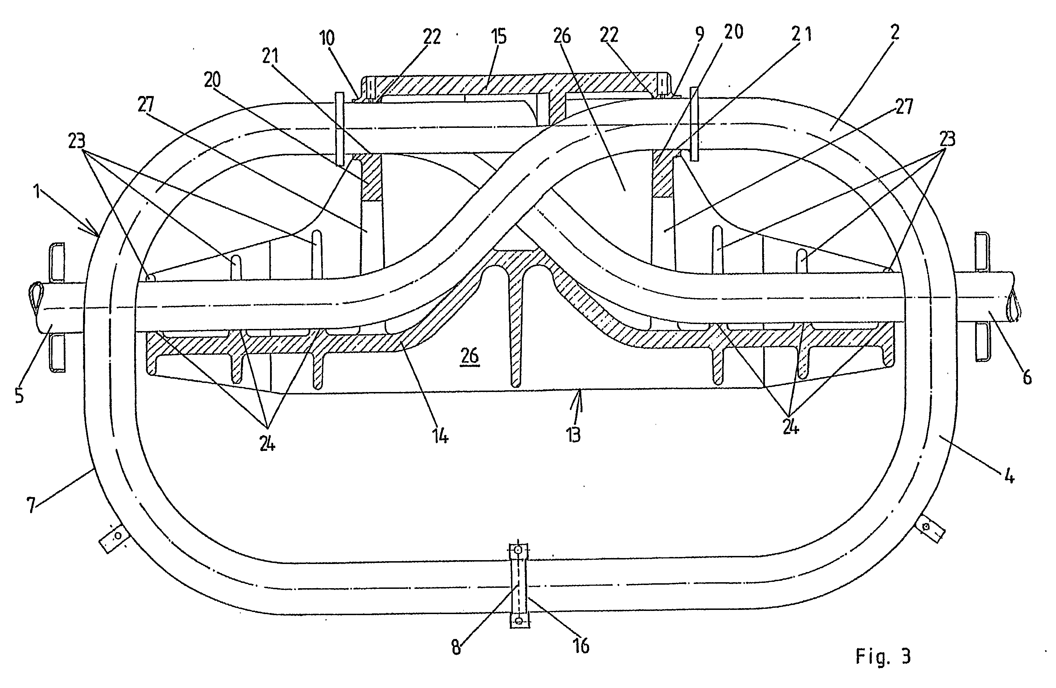

Zur Verspannung und Abstützung des Meßrohres 1 im Gußblock 13 sind die Grundplatte 14 und die Abdeckplatte 15 mit geeigneten Lagerteilen versehen. Den Fig. 3, 4 und 5 ist zu entnehmen, daß die Grundplatte 14 mit Seitenwänden 26 versehen ist, zwischen denen zur Lagerung der Rohrabschnitte 9, 10, 11, 12 zwei Stützstege 20 vorgesehen sind, die Halbschalen 21 aufweisen, in welche jeweils ein Rohrabschnitt 9, 10, 11, 12 paßt. Weiterhin sind auf der Grundplatte 14 mit Halbschalen 24 versehene Stützstege 23 angegossen, auf denen die Zu- und Ablaufenden 5, 6 lagern und angelötet sind. Entsprechend ist auch die in Fig. 6 gezeigte Abdeckplatte 15 mit Halbschalen 22 versehen, so daß die Rohrabschnitte 9, 10, 11, 12 an ihrem Umfang von den Halbschalen 21, 22 eingefaßt und eingespannt werden. Hierfür werden die Rohrabschnitte 9, 10, 11, 12 mit den Halbschalen 21, 22 verlötet, ebenso wird aber auch die Abdeckplatte 15 an dem kastenförmigen oberen Rand der Grundplatte 14 angeschweißt. Die beiden Stützstege 20 haben Ausschnitte 27, durch welche die Zu- bzw. Abflußenden 5, 6 ragen. Der Verlauf des Rohrverbindungsabschnitts 7, ist in Fig. 6 durch die zugehörige Mittellinie 25 angedeutet.

## Patentansprüche

1. Massendurchflußmeßgerät für strömende Medien mit Einrichtungen zur Ermittlung der Corioliskraft, bestehend aus einem mit zwei Rohrschleifen (2, 3) versehenen, schraubenartig gebogenen, durchgehenden Meßrohr (1), dessen Zu- und Abflußenden (5, 6) an einem massiven Gußblock (13) befestigt sind und zwischen dessen gegeneinander schwingbaren Rohrschleifen (2,3) ein Schwingungserzeuger (17) und zwei die Torsionsschwingungen messende Sensoren (18) angeordnet sind, dadurch gekennzeichnet, daß die beiden Rohrschleifen (2, 3) jeweils in einer Ebene oval gebogen sind, etwa parallel zueinander verlaufen und an einer Längsseite des Ovals jeweils mit zwei entlang einer gemeinsamen, in der jeweiligen Ebene liegenden Längsachse $(x_1 - x_1; x_2 - x_2)$ hintereinander liegenden Rohrabschnitten (9, 10 bzw. 11, 12) versehen sind, daß zwei in unterschiedlichen Ebenen, aber in Richtung der Längsachsen $(x_1 - x_1; x_2 - x_2)$ hintereinander liegende Rohrabschnitte (10, 11) durch einen in einem Winkel zu den Ebenen bzw. den Längsachsen $(x_1 - x_1; x_2 - x_2)$ verlaufenden mittleren Rohrverbindungsabschnitt (7') über Kreuz verbunden sind, daß die beiden anderen Rohrabschnitte (9, 12) in entgegengesetzten Richtungen bogenförmig zwischen die beiden Rohrschleifen (2, 3) und von dort entlang einer gemeinsamen, parallel zu den Längsachsen $(x_1 - x_1; x_2 - x_2)$ verlaufenden Achse an jeweils einer Stirnseite des Ovals nach außen geführt sind und dort in das Zuflußende (5) bzw. das Abflußende (6) auslaufen und daß die Rohrschleifen (2, 3) im Bereich der vier Rohrabschnitte (9, 10, 11, 12) im Gußblock (13) eingelegt, eingespannt und befestigt, vorzugsweise angelötet, sind.

2. Massendurchflußmeßgerät nach Anspruch 1, dadurch gekennzeichnet, daß das Meßrohr (1) aus zwei gleich geformten, etwa hakenförmig gebogenen Rohrbögen (4) und einem den Rohrverbindungsabschnitt (7') umfassenden mittleren Rohrbogen (7) besteht.

3. Massendurchflußmeßgerät nach Anspruch 2, dadurch gekennzeichnet, daß jeder hakenförmige Rohrbogen (4) sich von dem Zu- bzw. Abflußende (5, 6) bis zur Mitte der schwingbaren Längsseite der betreffenden Rohrschleife (2, 3) erstreckt und der mittlere Rohrbogen (7) die restlichen Teile der Rohrschleifen (2, 3) umfaßt.

4. Massendurchflußmeßgerät nach Anspruch 2 oder 3, dadurch gekennzeichnet, daß die Rohrbögen (4, 7) an den Stoßstellen miteinander verschweißt sind.

5. Massendurchflußmeßgerät nach den Ansprüchen 3 und 4, dadurch gekennzeichnet, daß die beiden durch die Verschweißung der Rohrbögen (4, 7) gebildeten orbitalen Schweißnähte (8) jeweils durch einen am Meßrohr (1) angelöteten Ring (16) abgedeckt sind und der Schwingungserzeuger (17) an den Ringen (16) befestigt ist.

6. Massendurchflußmeßgerät nach einem der Ansprüche 1 bis 5, dadurch gekennzeichnet, daß der Gußblock (13) aus einer innerhalb der ovalen Rohrschleifen (2, 3) liegenden und deren Ebenen schneidenden Grundplatte (14) und einer Abdeckplatte (15) besteht und daß die Grundplatte (14) und die Abdeckplatte (15) das Meßrohr (1) an den vier Rohrabschnitten (9, 10, 11, 12) einfassende Halbschalen (21, 22) aufweisen und mit den Rohrabschnitten (9, 10, 11, 12) sowie miteinander verlötet sind.

7. Massendurchflußmeßgerät nach Anspruch 6, dadurch gekennzeichnet, daß die Grundplatte (14) mit Stützstegen (23) und Halbschalen (24) versehen und über diese mit den Zu- und Ablaufenden (5, 6) verlötet sind.

## Claims

1. A mass flow meter for flowing media with equipment to measure the Coriolis force, that consists of a continuous measurement tube (1) helicoidally bent and provided with two tube loops (2, 3), its inflow and outflow ends (5, 6) being fastened to a massive cast block (13) and a vibration producer (17) and two sensors (18) measuring the torsional vibrations being located between its tube loops (2, 3) that can vibrate in opposition, characterized in that the two tube loops (2, 3) are each bent into a plane oval, run approximately parallel to one another, and are each provided at one longitudinal side of the oval with two tube segments (9, 10 or 11, 12) lying in series along a common longitudinal axis $(x_1 - x_1; x_2 - x_2)$ in the particular plane, that two tube segments (10, 11) lying in different planes but in series in the direction of the longitudinal axes $(x_1 - x_1; x_2 - x_2)$ are connected crosswise by a central tube-connecting portion (7') extending at an angle to the planes or To the longitudinal axes $(x_1 - x_1; x_2 - x_2)$, that the two other tube segments (9, 12) are led in opposite directions and in curved shape between the two tube loops (2, 3) and from there outwardly along a common axis parallel to the longitudinal axes $(x_1 - x_1; x_2 - x_2)$ each to one end of the oval and there terminate in the inflow end (5) or the outflow end (6), and that the tube loops (2, 3) are embedded, clamped and secured, preferably soldered, in the cast block (13) in the region of the four tube segments (9, 10, 11, 12).

2 A mass flow meter according to Claim 1, characterized in that the measurement tube (1) consists of two identically shape tubes (4), bent approximately in hook shape, and a central bent tube (7) comprising the tube-connecting portion (7').

3. A mass flow meter according to Claim 2, characterized in that each hook-shaped bent tube (4) extends from the inflow or outflow end (5, 6) to the centre of the vibratable longitudinal side of the tube loop (2, 3) concerned, and the central bent tube (7) comprises the remaining part of the tube loop (2, 3).

4. A mass flow meter according to Claim 2 or 3, characterized in that the bent tubes (4, 7) are welded together at their abutments.

5. A mass flow meter according to Claims 3 and 4, characterized in that each of the two orbital seams (8) produced by the welding of the bent tubes (4, 7) is covered by a ring (16) soldered to the measurement tube (1) and the vibration producer (17) is attached to the rings (16).

6. A mass flow meter according to one of Claims 1 to 5, characterized in that the cast block (13) consists of a baseplate (14) lying within the oval tube loops (2, 3) and intersecting their planes, and a cover plate (15; and that the baseplate (14) and the cover plate (15) possess half shells (21, 22) that clamp the measurement tube (1) at the four tube segments (9, 10, 11, 12) and are soldered to the tube segments (9, 10, 11, 12) as well as to one another.

7. A mass flow meter according to Claim 6, characterized in that the baseplate (14) is provided with support flanges (23) and half shells (24) and by them is soldered to the inflow and outflow ends (5, 6).

**Revendications**

1. Débitmètre pour mesurer le débit massique de fluides en écoulement, comportant des dispositifs pour déterminer la force de Coriolis et constitué par un tube de mesure continu (1), recourbé avec une forme hélicoïdale, équipé de deux boucles tubulaires (2, 3) et dont les extrémités d'arrivée et d'évacuation (5, 6) sont fixées à un bloc de fonte massif (13), un générateur d'oscillations (17) et deux capteurs (18) mesurant les oscillations de torsion étant disposés entre les boucles tubulaires (2, 3) du tube de mesure, aptes à osciller en opposition l'une par rapport à l'autre, caractérisé par le fait que les deux boucles tubulaires (2, 3) sont cintrées avec une forme ovale chacune dans un plan, sont approximativement parallèles entre elles et comportent, sur un côté longitudinal de l'ovale, respectivement deux sections tubulaires (9, 10 et 11, 12), qui sont situées l'une derrière l'autre le long d'un axe longitudinal commun $(x_1 - x_1; x_2 - x_2)$ situé dans le plan respectif, que deux sections tubulaires (10, 11), situées dans des plans différents mais disposées l'une derrière l'autre dans la direction des axes longitudinaux $(x_1 - x_1; x_2 - x_2)$ sont réunies en croix par une section médiane de raccordement tubulaire (7'), qui fait un angle par rapport aux plans ou aux axes longitudinaux $(x_1 - x_1; x_2 - x_2)$, que les deux autres sections tubulaires (9, 12) s'étendent dans des directions opposées et avec une forme coudée entre les deux boucles tubulaires (2, 3) et, à partir de là, s'étendent le long d'un axe commun parallèle aux axes longitudinaux $(x_1 - x_1; x_2 - x_2)$ en sortant au niveau de côtés frontaux respectifs de l'ovale, et, en cet endroit, se prolongent par l'extrémité d'amenée (5) et par l'extrémité d'évacuation (6), et que les boucles tubulaires (2, 3) sont insérées, serrées et fixées, de préférence par brasage, au niveau des quatre sections tubulaires (9, 10, 11, 12) dans le bloc de fonte (13).

2. Débitmètre pour la mesure d'un débit massique selon la revendication 1, caractérisé en ce que le tube de mesure (1) est constitué de deux coudes tubulaires (4) de même forme, recourbés approximativement avec une forme de crochet, et par un coude tubulaire médian (7) incluant la section de raccordement tubulaire (7').

3. Débitmètre pour la mesure d'un débit massique selon la revendication 2, caractérisé en ce que chaque coude tubulaire en forme de crochet (4) s'étend depuis l'extrémité d'amenée ou l'extrémité d'évacuation (5, 6) jusqu'au centre du côté longitudinal, apte à osciller, de la boucle tubulaire considérée (2, 3) et que le coude tubulaire médian (7) inclut les parties restantes des boucles tubulaires (2, 3).

4. Débitmètre pour la mesure d'un débit massique selon la revendication 2 ou 3, caractérisé en ce que les coudes tubulaires (4, 7) sont soudés entre eux au niveau des points d'aboutement.

5. Débitmètre pour la mesure d'un débit massique selon les revendications 3 et 4, caractérisé en ce que les deux cordons orbitaux de soudure (8), formés par le soudage des coudes tubulaires (4, 7), sont masqués respectivement par un anneau (16) fixé par brasage sur le tube de mesure (1) et que le générateur d'oscillations (17) est fixé sur les anneaux (16).

6. Débitmètre pour la mesure d'un débit massique selon l'une des revendications 1 à 5, caractérisé en ce que le bloc de fonte (13) est constitué par une plaque de base (14), qui est située à l'intérieur des boucles tubulaires ovales (2, 3) et recoupe les plans de ces boucles, et par une plaque de couverture (15), et que la plaque de base (14) et la plaque de couverture (15) possèdent des demicoques (21, 22), qui enserrent le tube de mesure (1) au niveau des quatre sections tubulaires (9, 10, 11, 12) et sont soudées à ces sections (9, 10, 11, 12) ainsi qu'entre elles.

7. Débitmètre pour la mesure d'un débit massique selon la revendication 6, caractérisé en ce que la plaque de base (14) comporte des barrettes de support (23) et des demi-coques (24) et est soudée, par l'intermédiaire de ces dernière, aux extrémités d'amenée et d'évacuation (5, 6).

Fig. 1

Fig. 6

Fig. 2

EP 0 271 605 B1

Fig. 3

EP 0 271 605 B1

Fig. 4

Fig. 5

Fig. 7

EP 0 271 605 B1